# EUROPÄISCHE PATENTSCHRIFT

(11) **EP 1 204 700 B1**
(45) Veröffentlichungstag und Bekanntmachung des Hinweises auf die Patenterteilung: **23.07.2003**
(21) Anmeldenummer: 00951473.8
(22) Anmeldetag: 01.08.2000
(51) Int. Cl.: C08J 9/00, C08J 9/16, C08J 9/14

(54) **BIOLOGISCH ABBAUBARE SCHAUMSTOFFPARTIKEL**
BIOLOGICALLY DEGRADABLE FOAMED MATERIAL PARTICLES
PARTICULES DE MOUSSE BIODEGRADABLES

(30) Priorität: 11.08.1999 DE 19938008
(43) Veröffentlichungstag der Anmeldung: 15.05.2002
(73) Patentinhaber: BASF AKTIENGESELLSCHAFT, 67056 Ludwigshafen (DE)
(72) Erfinder: BRAUN, Frank, D-67063 Ludwigshafen (DE); GLÜCK, Guiscard, Tokyo 141-0022 (JP)
(86) Internationale Anmeldenummer: EP0007441
(87) Internationale Veröffentlichungsnummer: WO01012706

(56) Entgegenhaltungen:
- WO-A-94/06866
- DE-A- 19 802 718

## Beschreibung

Die Erfindung betrifft expandierbare Polymerpartikel auf Basis von biologisch abbaubaren Polymeren.

Es ist bekannt, daß einige natürlich vorkommende Materialien, z.B. Cellulose und Stärke, bioabbaubar sind, d.h. durch Mikroorganismen, insbesondere bei der Kompostierung zu niedermolekularen Substanzen zersetzt werden. Auch einige synthetische Polymere sind bioabbaubar, z.B. Polyester. Rein aliphatische Polyester sind zwar gut bioabbaubar, sie sind aber aufgrund ihres niedrigen mechanischen und thermischen Eigenschaftsniveaus für die praktische Anwendung kaum geeignet. Aromatische Polyester zeigen dagegen gute mechanische Eigenschaften, sie sind aber nicht biologisch abbaubar.

Aus WO 96/07687 ist bekannt, daß Copolyester, die als Monomerkomponenten aliphatische Diole einerseits und sowohl aliphatische als auch aromatische Dicarbonsäuren andererseits enthalten, gleichzeitig gute mechanische und thermische Eigenschaften aufweisen und biologisch abbaubar sind. In der Druckschrift sind auch geschäumte Formteile erwähnt, über deren Herstellung ist aber nichts ausgesagt.

In WO 96/15173 sind ebenfalls bioabbaubare Copolyester aus aliphatischen Diolen und einer Mischung aus Adipinsäure und Terephthalsäure beschrieben, die durch Einbau weiterer Veresterungskomponenten modifiziert sind. Aus diesen Polyestern können Schaumstoffe durch Vermischen einer Polymerschmelze mit Treibmitteln und Schaumextrusion der Mischung hergestellt werden.

Das Schaumextrusionsverfahren hat den Nachteil, daß dabei nur Schaumstoff-Formkörper einfacher Gestalt, z.B. Platten oder Profile, hergestellt werden können. Schaumstoff-Formkörper beliebiger Gestalt können bekanntlich durch Aufschäumen und Versintern von expandierbaren bzw. expandierten Polymerpartikeln, z.B. auf Basis von Polystyrol bzw. Polyolefinen hergestellt werden.

Aliphatisch/aromatische Copolyester bauen bei der Kompostierung verhältnismäßig langsam ab. Durch Zumischen der rasch abbauenden natürlichen Polymeren läßt sich der Abbauvorgang gezielt einstellen. Die EP-A 667 369 beschreibt Partikelschaumstoffe aus bioabbaubaren Mischungen von thermoplastischer Stärke und einem synthetischen thermoplastischen Polymeren, z.B. einem aliphatischen Polyester. Dabei werden die Polymermischungen zusammen mit 2 bis 20 % Wasser als Treibmittel extrudiert und zu expandierbaren Partikeln granuliert, die dann in einem Extruder aufgeschäumt werden. Der Wassergehalt muß von Fall zu Fall sehr genau eingestellt werden. Bei zu hohem Gehalt besteht die Gefahr, daß der Polyester hydrolysiert und die Stärke angelöst wird. Die Schaumpartikel müssen dann aufwendig getrocknet werden.

Schließlich beschreibt auch die WO 97/44388 Schaumstoffe aus feuchtigkeitsresistenten, bioabbaubaren Mischungen von natürlichen Polymeren, z.B. Stärke, mit hydroxyfunktionellen Polyestern. Auch diese bioabbaubaren Materialien wurden nach dem Schaumextrusionsverfahren mit Wasser als Treibmittel geschäumt.

Der Erfindung lag daher die Aufgabe zugrunde, expandierbare Partikel aus Mischungen von bioabbaubaren natürlichen Polymeren und bioabbaubaren Polyestern bereitzustellen, die die genannten Nachteile nicht aufweisen.

Diese Aufgabe wird gelöst durch Aufschmelzen einer Mischung aus
A. einem bioabbaubaren aliphatisch/aromatischen Copolyester und
B. einem bioabbaubaren natürlichen Polymeren
   in einem Extruder, Vermischen mit einem flüchtigen organischen Treibmittel, Auspressen und Granulieren.

Für das erfindungsgemäße Verfahren geeignete Polyester sind in den zitierten Druckschriften WO 96/07687, WO 96/15173 und WO 97/44388 beschrieben.

Zu den besonders bevorzugten aliphatisch/aromatischen Polyestern zählen Polyester, die als wesentliche Komponenten enthalten:
a) eine Säurekomponente aus
   a1) 30 bis 70 mol-% mindestens einer aliphatischen oder cycloaliphatischen C₂-C₂₀-Dicarbonsäure oder deren esterbildenden Derivate oder Mischungen davon,
   a2) 30 bis 70 mol-% mindestens einer aromatischen Dicarbonsäure oder deren esterbildenden Derivate und
b) einer Diolkomponente aus mindestens einem C₂-C₁₂-Alkandiol oder einem C₅- bis C₁₀-Cycloalkandiol oder Mischungen davon, sowie gegebenenfalls
c) einer Komponente ausgewählt aus
   c1) mindestens einer Verbindung mit mindestens drei zur Esterbildung befähigten Gruppen,
   c2) mindestens eines Isocyanates
   c3) mindestens eines Divinylethers,
      oder Mischungen davon.

Der Einbau der Komponente c) führt zu Langkettenverzweigung.

Als aliphatische bzw. cycloaliphatische Säuren und die entsprechenden Derivate al kommen die oben genannten in Betracht. Besonders bevorzugt werden Adipinsäure oder Sebacinsäure, deren jeweiligen esterbildenden Derivate oder Mischungen davon eingesetzt.

Als aromatische Dicarbonsäure a2 sind im allgemeinen solche mit 8 bis 12 Kohlenstoffatomen zu nennen. Beispielhaft erwähnt seien Terephthalsäure, Isophthalsäure, 2,6-Naphthoesäure und 1,5-Naphthoesäure sowie esterbildende Derivate davon. Dabei sind insbesondere die Di-C₁-C₆-Alkylester sowie die Anhydride geeignet. Die aromatischen Dicarbonsäuren oder deren esterbildende Derivate a2 können einzeln oder als Gemisch aus zwei oder mehr davon eingesetzt werden. Besonders bevorzugt wird Terephthalsäure oder deren esterbildende Derivate wie Dimethylterephthalat, verwendet.

Die teilaromatischen Polyester sind charakterisiert durch ein Molekulargewicht (Mn) im Bereich von 5000 bis 100000, insbesondere im Bereich von 10000 bis 40000 g/mol, mit einer Viskositätszahl im Bereich von 50 bis 400, insbesondere im Bereich von 100 bis 300 g/ml (gemessen in o-Dichlorobenzol/Phenol; Gew.-Verhältnis 50/50, bei einer Konzentration von 0,5 Gew.-% Polymer und einer Temperatur von 25°C).

Natürliche Polymere B sind vorzugsweise Stärke oder Cellulose sowie deren Derivate, wie z.B. Ester oder Ether, ferner Poly-(hydroxycarbonsäuren), wie Polymilchsäure und Polyhydroxybuttersäure, sowie Poly(aminocarbonsäuren), wie Polyasparaginsäure und deren Derivate.

Das Gewichtsverhältnis A : B beträgt 9 : 1 bis 1 : 9, vorzugsweise 3 : 1 bis 1 : 3 und insbesondere 2 : 1 bis 1 : 2.

Die biologisch abbaubaren Polymeren A + B können Zusatzstoffe enthalten, beispielsweise Stabilisatoren, Neutralisationsmittel, Gleit- und Trennmittel, Antiblockmittel, Nukleierungsmittel, Flammschutzmittel, nicht fluoreszierende Farbstoffe oder Füllstoffe.

Bei dem erfindungsgemäßen Herstellverfahren wird die Polymermischung A + B gegebenenfalls zusammen mit den Zusatzstoffen in einem Extruder aufgeschmolzen, vorzugsweise bei 70 bis 220°C, und mit einem flüchtigen Treibmittel vermischt. Bevorzugte Treibmittel sind C₃-C₈-Kohlenwasserstoffe, Halogenkohlenwasserstoffe, C₁-C₃-Alkohole. Besonders bevorzugt sind Butan, Pentan, Isobutan und Ethanol. Das Treibmittel wird bevorzugt in Mengen von 1 bis 20 Gew.-%, bezogen auf A + B, eingesetzt.

Nach dem Auspressen aus dem Extruder kann man den Schmelzstrang entweder in einem Wasserbad abkühlen und dann granulieren oder man kann ihn unmittelbar nach seinem Austritt durch Heißabschlag granulieren und das Granulat dann abkühlen.

Die erhaltenen expandierbaren Polymerpartikel haben im allgemeinen einen Durchmesser von 0,2 bis 5 mm. Sie können nach üblichen Methoden, z.B. mit Wasserdampf oder Heißluft zu Schaumpartikeln expandiert werden.

Die Schaumpartikel können wie üblich in geschlossenen Formen mit Wasserdampf oder Heißluft zu Schaumstoff-Formteilen beliebiger Gestalt weiter geschäumt und versintert werden.

Die Schaumpartikel selbst können als Bodenauflockerungsmittel im Acker und im Garten verwendet werden, wobei durch das Verhältnis A : B die Abbauzeit gezielt einstellbar ist.

Schaumstoff-Formteile aus den biologisch abbaubaren Schaumpartikeln können als Einweggeschirr, Verpackungstabletts, Schalen und Becher verwendet werden. Nach Zerkleinerung können sie kompostiert und dabei abgebaut werden.

## Patentansprüche

1. Verfahren zur Herstellung von expandierbaren Polymerpartikeln auf Basis einer Mischung aus
A. einem bioabbaubaren gesättigten, aliphatisch/aromatischen Copolyester und
B. einem bioabbaubaren natürlichen Polymeren
im Gewichtsverhältnis A : B von 9 : 1 bis 1 : 9, **dadurch gekennzeichnet, daß** die Mischung aus A + B in einem Extruder aufgeschmolzen, mit einem flüchtigen organischen Treibmittel vermischt, ausgepreßt und granuliert wird.

2. Verfahren nach Anspruch 1, **dadurch gekennzeichnet, daß** der Polyester A ein Kondensationsprodukt ist aus
a. einer Säurekomponente aus
a1. 30 bis 70 mol-% einer aliphatischen oder cycloaliphatischen C₂-C₂₀-Dicarbonsäure oder deren esterbildenden Derivate,
a2. 70 bis 30 mol-% einer aromatischen Dicarbonsäure oder deren esterbildenden Derivate,
b. einer Diolkomponente aus einem C₂-C₁₂-Alkandiol oder einem C₅-C₁₀-Cycloalkandiol, sowie gegebenenfalls
c. weiteren esterbildenden Komponenten.

3. Verfahren nach Anspruch 1, **dadurch gekennzeichnet, daß** das Polymere B Stärke oder Cellulose oder deren Derivate, insbesondere ein Ester oder ein Ether, ist.

4. Verfahren nach Anspruch 1, **dadurch gekennzeichnet, daß** das flüchtige organische Treibmittel ein C₃-C₈-Kohlenwasserstoff oder ein C₁-C₃-Alkohol ist.

5. Verfahren nach Anspruch 1, **dadurch gekennzeichnet, daß** das Treibmittel in Mengen von 1 bis 20 Gew.-%, bezogen auf A + B, eingesetzt wird.

6. Verfahren nach Anspruch 1, **dadurch gekennzeichnet, daß** der aus dem Extruder ausgepreßte Schmelzestrang in einem Wasserbad abgekühlt und der erstarrte Strang granuliert wird.

7. Verfahren nach Anspruch 1, **dadurch gekennzeichnet, daß** der aus dem Extruder ausgepreßte Schmelzestrang unmittelbar nach seinem Austritt granuliert und das Granulat abgekühlt wird.

8. Verwendung der expandierbaren Polymerpartikel nach Anspruch 1 zur Herstellung von bioabbaubaren Polymerschaumstoffen.

## Claims

1. A process for preparing expandable polymer beads based on a mixture made from
A. a biodegradable saturated aliphatic/aromatic copolyester and
B. a biodegradable naturally occurring polymer
in a weight ratio A : B of from 9 : 1 to 1 : 9, which comprises melting the mixture made from A + B in an extruder, mixing the same with a volatile organic blowing agent, and extruding and pelletizing the same.

2. A process as claimed in claim 1, wherein the polyester A is a condensation product made from
a. an acid component made from
a1. from 30 to 70 mol% of an aliphatic or cycloaliphatic C₂-C₂₀ dicarboxylic acid or of ester-forming derivatives of these,
a2. from 70 to 30 mol% of an aromatic dicarboxylic acid or of ester-forming derivatives of these,
b. a diol component made from a C₂-C₁₂ alkanediol or from a C₅-C₁₀ cycloalkanediol, and also, if desired,
c. other ester-forming components.

3. A process as claimed in claim 1, wherein the polymer B is starch or cellulose or derivatives of the same, in particular an ester or an ether.

4. A process as claimed in claim 1, wherein the volatile organic blowing agent is a C₃-C₈ hydrocarbon or a C₁-C₃ alcohol.

5. A process as claimed in claim 1, wherein the amount of the blowing agent used is from 1 to 20% by weight, based on A + B.

6. A process as claimed in claim 1, wherein the melt extrudate discharged from the extruder is cooled in a water bath and the solidified extrudate is pelletized.

7. A process as claimed in claim 1, wherein the melt extrudate discharged from the extruder is pelletized immediately after being discharged and the pellets are cooled.

8. The use of the expandable polymer beads as claimed in claim 1 for producing biodegradable polymer foams.

## Revendications

1. Procédé de préparation de particules de polymères expansibles à base d'un mélange
A. d'un copolyester aliphatique/aromatique saturé, biodégradable et
B. d'un polymère naturel biodégradable,
dans un rapport pondéral A/B de 9/1 à 1/9, **caractérisé en ce que** le mélange de A + B est fondu dans une extrudeuse, additionné d'un agent gonflant organique, volatil, pressé et granulé.

2. Procédé suivant la revendication 1, **caractérisé en ce que** le polyester A est un produit de condensation
a. d'un composant acide à base
a1. de 30 à 70 moles % d'un acide dicarboxylique en C₂-C₂₀ aliphatique ou cycloaliphatique ou de ses dérivés formateurs d'ester,
a2. de 70 à 30 moles % d'un acide dicarboxylique aromatique ou de ses dérivés formateurs d'ester,
b. d'un composant diol à base d'un alcanediol en C₂-C₁₂ ou d'un cycloalcanediol en C₅-C₁₀, ainsi qu'éventuellement
c. d'autres composants formateurs d'ester.

3. Procédé suivant la revendication 1, **caractérisé en ce que** le polymère B est de l'amidon ou de la cellulose ou leurs dérivés, en particulier un ester ou un éther.

4. Procédé suivant la revendication 1, **caractérisé en ce que** l'agent gonflant organique volatil est un hydrocarbure en C₃-C₈ ou un alcool en C₁-C₃.

5. Procédé suivant la revendication 1, **caractérisé en ce que** l'agent gonflant est mis en oeuvre en des quantités de 1 à 20% en poids, par rapport à A + B.

6. Procédé suivant la revendication 1, **caractérisé en ce que** le boudin de masse fondue pressé hors de l'extrudeuse est refroidi dans un bain aqueux et **en ce que** le boudin solidifié est granulé.

7. Procédé suivant la revendication 1, **caractérisé en ce que** le boudin de masse fondue pressé hors de l'extrudeuse est directement granulé après sa sortie et **en ce que** le produit de granulation est refroidi.

8. Utilisation de particules de polymères expansibles suivant la revendication 1 pour la fabrication de mousses polymères biodégradables.
